# EUROPÄISCHE PATENTSCHRIFT

(11) **EP 2 918 158 B1**
(45) Veröffentlichungstag und Bekanntmachung des Hinweises auf die Patenterteilung: **03.10.2018**
(21) Anmeldenummer: 15000712.8
(22) Anmeldetag: 11.03.2015
(51) Int. Cl.: A01D 34/135, A01D 34/30

(54) **SCHNEIDEINRICHTUNG FÜR LANDWIRTSCHAFTLICHE MASCHINEN**
CUTTING DEVICE FOR AGRICULTURAL MACHINES
DISPOSITIF DE DÉCOUPE POUR MACHINES AGRICOLES

(30) Priorität: 14.03.2014 DE 102014003493
(43) Veröffentlichungstag der Anmeldung: 16.09.2015
(73) Patentinhaber: Carl Geringhoff GmbH & Co. KG, 59227 Ahlen (DE)
(72) Erfinder: Surmann, Klemens, 59227 Ahlen (DE); Webermann, Dirk, 48308 Senden (DE); Pokriefke, Michael, 27798 Hude (DE)
(74) Vertreter: Weeg, Thomas

(56) Entgegenhaltungen:
- DE-A1- 19 524 039
- DE-U1- 20 301 750

## Beschreibung

Die vorliegende Erfindung bezieht sich auf eine Schneideinrichtung für landwirtschaftliche Maschinen nach dem Oberbegriff des Anspruchs 1.

Eine Schneideinrichtung ist aus der Schrift DE 195 24 039 A1 bekannt. Die gattungsgemäßen Schneideinrichtungen können insbesondere bei Schneidwerken für Mähdrescher, aber auch an Mähwerken für Gras oder zur Ernte anderer landwirtschaftlicher Halmgüter eingesetzt werden.

In der Schrift DE 195 24 039 A1 ist offenbart, eine Schneideinrichtung in zumindest zwei Schneideinrichtungsteile zu unterteilen, um Schwingungen zu unterbinden und Schüttelverluste zu vermeiden. Durch eine Phasenverschiebung der Antriebsfrequenz um 180° soll die Schwingung, die von einem Schneideinrichtungsteil hervorgerufen wird, von dem weiteren Schneideinrichtungsteil kompensiert und im günstigsten Fall aufgehoben werden. Daraus resultiert eine gegenläufige Bewegung der Schneideinrichtungsteile quer zur Arbeitsrichtung der Schneideinrichtung. Bei einer gegenläufigen Bewegung der Schneideinrichtungsteile zueinander, bei sich diese voneinander entfernen, entsteht zwischen ihnen eine im Bewegungsverlauf größer werdende Lücke, die sich erst nach Erreichen der beiden äußeren Totpunkte bei der anschließenden rückläufigen Bewegung wieder zunehmend schließt und nur kurzzeitig geschlossen ist, wenn die beiden Schneideinrichtungsteile ihren inneren Totpunkt erreicht haben. Bei einer Phasenverschiebung um einen anderen Betrag als 180° wird die Lücke nur kurzzeitig und abwechselnd asymmetrisch rechts und links geschlossen. Im Bereich der Lücke entsteht bei der Vorfahrt mit der Schneideinrichtung in einen stehenden Bestand eines Ernteguts ein ungemähter Streifen, der einen unerwünschten Erntegutverlust darstellt.

In der Schrift DE 203 01 750 U1 ist eine gattungsgemäße Schneideinrichtung offenbart. Auch hier ist der Messerbalken in zwei Teile geteilt, die in entgegengesetzte Richtungen beweglich sind, so dass sich im mittigen Anstoßbereich zeitweise ein ungemäht bleibender Streifen des Ernteguts ergibt.

Es ist die Aufgabe der vorliegenden Erfindung, die Breite des ungemähten Streifens möglichst gering zu halten oder diesen gänzlich zu vermeiden.

Die Aufgabe wird für eine gattungsgemäße Schneideinrichtung durch die kennzeichnenden Merkmale des Anspruchs 1 gelöst.

Ist die Schneideinrichtung mit einem Fingermähbalken versehen, bei dem die Mähfinger die Gegenschneide ausbilden und die Messerklingen in den Fingerbalken hin und her beweglich geführt sind, ergibt sich ein sauberer und vergleichsweise wenig Kraft verbrauchender Schnitt des zu erntenden Halmguts. Ein Fingermähbalken ist vergleichsweise unempfindlich gegen Steine und andere Hindernisse bei einem geringen Wartungsaufwand, da nur vergleichsweise wenige bewegliche Teile vorhanden sind. Durch die an einem Fingermähbalken über die Arbeitsbreite verteilt angebrachten Mähfinger ist es insbesondere möglich, beim Vorfahren in den Bestand eines Erntegutes mit den Mähfingern auf dem Boden lagerndes Halmgut anzuheben, bevor es geschnitten wird. Dadurch werden zusätzliche Erntegutverluste vermieden, was besonders bei bodennah zu schneidendem Erntegut wie beispielsweise Soja von besonderer Bedeutung ist.

Durch diese Kombination der Anordnung von Messerklingen und der Ausbildung der an ihnen vorhandenen Schnittkanten ist es möglich, die Lücke, die sich in Folge der Bewegung der Messerbalkenabschnitte ergibt und sich laufend entsprechend der Bewegung der Messerbalkenabschnitte verkleinert und wieder vergrößert, durch die ortsfest angeordnete Messerklinge zu überbrücken. Dabei wirken die V-förmig angeordneten Schnittkanten der ortsfest angeordneten Messerklinge mit den Schnittkanten der an den einander zugewandten Enden benachbarter Messerbalkenabschnitte angebrachten äußeren Messerklingen während ihrer Hubbewegung auf den im Bereich der Lücke angeordneten Mähfinger zu scherenschnittartig zusammen, um auch die Halme des im Bereich der ortsfest angeordneten Messerklinge anstehenden Ernteguts sicher abschneiden zu können. Auf diese Weise wird ein ungemähter Streifen im Bereich der Lücke zwischen den Messerbalkenabschnitten vermieden. Auch ist es durch die erfindungsgemäße Anordnung möglich, im Bereich der Lücke und seitlich daneben Mähfinger anzuordnen, die auch im Bereich der Lücke am Boden lagerndes Erntegut anheben und Erntegutverluste durch einen sicheren Schnitt vermeiden helfen.

Durch den Phasenversatz im Antrieb der benachbarten Messerbalkenabschnitte in einer Größenordnung zwischen 80° und 100° wird erreicht, dass die beim Schneiden des Halmguts auftretenden Kraftspitzen der beiden Messerbalkenabschnitte zeitversetzt auftreten und der Gesamtkraftbedarf der Schneideinrichtung dadurch vergleichsweise niedrig gehalten werden kann. Zudem ergeben sich bei einer gegebenen Breite der Messerklingen und einem daraus resultierenden Abstand der Mähfinger zueinander geometrische Verhältnisse, bei denen die Lücke zwischen den Messerbalken nicht zu groß wird und durch die ortsfeste Messerklinge überbrückt werden kann, deren Breite zumindest annähernd oder genau der Breite der übrigen Messerklingen entspricht. Der angegebene Phasenversatz von 80° bis 100° gilt für einen mechanischen Antrieb mit drehenden Wellen bezogen auf eine volle Umdrehung der Antriebswelle von 360°, bei einer hydraulischen oder elektronischen Steuerung kann der Phasenversatz auch durch hydraulische oder elektronische Mittel realisiert werden.

Nach einer Ausgestaltung der Erfindung ist der im Bereich der Lücke angeordnete Mähfinger mit zwei weiteren beabstandet zu diesem angeordneten Mähfingern über eine gemeinsame Befestigungsleiste verbunden, und der seitliche Abstand der beiden weiteren Mähfinger zu dem im Bereich der Lücke angeordneten Mähfinger entspricht jeweils höchstens der Breite einer in diesem Zwischenraum bewegten Messerklinge. Der auf diese Weise gebildete Dreifach-Mähfinger bildet eine sichere Führung für die einander zugewandten Enden der benachbarten Messerbalkenabschnitte und der daran befestigten äußeren Messerklingen während ihrer Hubbewegungen. Durch den auf maximal eine Messerklingenbreite verringerten Abstand zwischen den Mähfingern können diese eine in diesem Bereich bewegte Messerklinge gut abstützen. Die äußeren Messerklingen der Messerbalkenabschnitte werden bei der Hubbewegung durch die Mähfinger abgestützt und können so einen Schnitt sauberer ausführen. Auch sinkt die Sprödbruchanfälligkeit und die Standfestigkeit der äußeren Messerklingen steigt, wenn die äußeren Messerklingen durch die bessere Abstützung geringere Torsionskräfte aufnehmen müssen.

Nach einer Ausgestaltung der Erfindung weisen die äußeren Messerklingen, die an den einander zugewandten Enden benachbarter Messerbalkenabschnitte angebracht sind, jeweils eine Breite auf, die zumindest annähernd der Hälfte der Breite der übrigen an einem Messerbalkenabschnitt angebrachten Messerklingen entspricht, und die Messerklinge, die ortsfest im Bereich des im Bereich der Lücke angeordneten Mähfingers angeordnet ist, weist eine Breite auf, die zumindest annähernd der Breite der übrigen an einem Messerbalkenabschnitt angebrachten Messerklingen entspricht. Durch die etwa halbierte Breite der äußeren Messerklingen ergibt sich bei einer etwa trapezförmigen Grundform einer ganzen Messerklinge an der äußeren Stirnseite eine lange, gerade Schnittkante, die gut mit der zugehörigen Schnittkante an der ortsfest im Bereich des Mähfingers angeordneten Messerklinge zusammenwirkt, um Halmgut zu schneiden, wobei die lange Schnittkante im Verlauf einer Hubbewegung die gesamte zugehörige Schnittkante der ortsfest angeordneten Messerklinge überschneidet und in zumindest einer Endlage von einem im Bereich der Lücke angeordneten Mähfinger abgedeckt ist.

Nach einer Ausgestaltung der Erfindung sind zwei benachbarte Messerbalkenabschnitte mit einem Antrieb versehen, der die beiden Messerbalkenabschnitte phasenversetzt antreibt. Mit dem Phasenversatz ist ein Antrieb gemeint, bei dem die Messerbalkenabschnitte nicht zeitgleich entgegengesetzt oder gleichsinnig beweglich sind. Der Antrieb kann beispielsweise über eine oder mehrere Kurbeln, Schubstangen, Exzenter, einen Hydraulikzylinder oder einen Elektromotor erfolgen. Der Phasenversatz kann über geeignete mechanische Vorrichtungen und/oder über elektrische, elektronische oder hydraulische Schaltungen bewirkt werden. Durch den Phasenversatz wird erreicht, dass die Spitzenlast auf den Antriebsstrang, die bei Erreichen einer Position der Messerklingen im Verhältnis zu den Mähfingern als Gegenschneiden auftritt, immer nur für einen von zwei benachbarten Messerbalkenabschnitten auftritt, so dass sich die Spitzenlast halbiert und um den Phasenversatz zeitversetzt für den jeweils in der entsprechenden Position befindlichen Messerbalkenabschnitt auftritt. Dadurch kann der Antriebsstrang entlastet und leichter ausgelegt werden.

Nach einer Ausgestaltung der Erfindung sind zwei benachbarte Messerbalkenabschnitte von einer rotierend angetriebenen Antriebsscheibe angetrieben, deren Drehbewegung über exzentrisch und phasenversetzt mit der Antriebsscheibe verbundene Pleuelstangen auf Kipphebel übertragen ist, die jeweils um etwa mittig angeordnete Schwenkachsen beweglich sind und an ihren der Verbindung mit der zugehörigen Pleuelstange abgewandten Enden mit dem jeweils zugehörigen Messerbalkenabschnitt verbunden sind. Der Antrieb der beiden Messerbalkenabschnitte über eine Antriebsscheibe stellt eine gute mechanische Kopplung und Synchronisation der Bewegungen der beiden Messerbalkenabschnitte sicher. Der Antrieb ist raum- und gewichtssparend ausführbar, was bei Schneidwerken ein wichtiger Gesichtspunkt ist.

Nach einer Ausgestaltung der Erfindung sind die Antriebsscheibe und die Pleuelstangen in einem geschlossenen Getriebegehäuse gelagert, das sich an der Unterseite der Schneideinrichtung und hinter den Messerbalkenabschnitten befindet. Durch das geschlossene Gehäuse wird der Antrieb wartungsfrei. Durch den besseren Schutz gegen Schmutz ist der Antrieb langlebiger und weniger störungsanfällig.

Es wird ausdrücklich darauf hingewiesen, dass die vorstehend beschriebenen Ausgestaltungen der Erfindung jeweils für sich, aber auch in einer beliebigen Kombination untereinander mit dem Gegenstand des Anspruchs 1 kombinierbar ist.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher erläutert werden. Es zeigen:
- Fig. 1:: eine Prinzipskizze einer Schneideinrichtung,
- Fig. 2:: die Schneideinrichtung aus Fig. 1 mit einer abgewandelte Position der Messerbalkenabschnitte, und
- Fig. 3:: die Schneideinrichtung aus Fig. 1 mit einer weiter abgewandelten Position der Messerbalkenabschnitte.

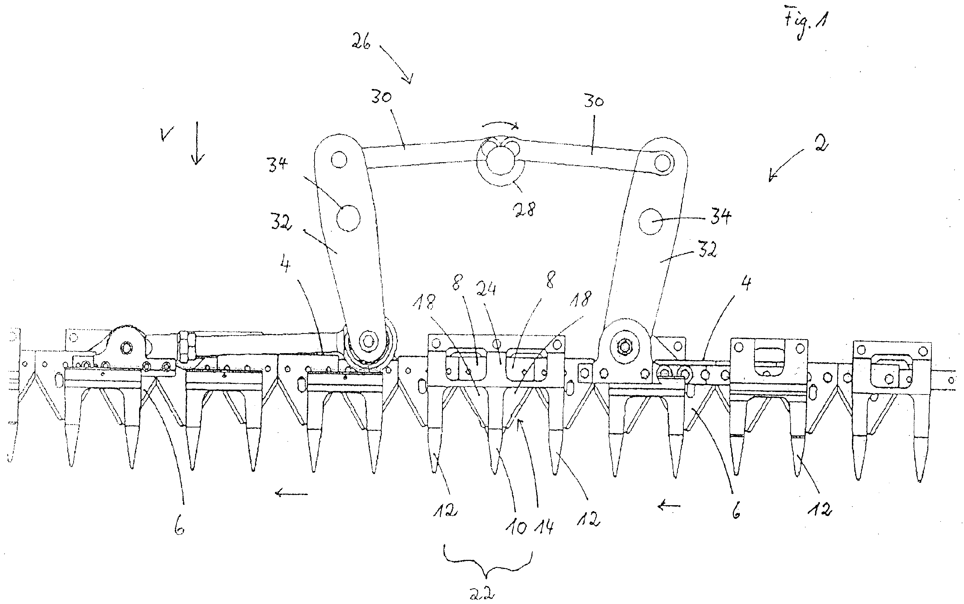

In Fig. 1 ist eine Prinzipskizze einer Schneideinrichtung 2 gezeigt. Die Schneideinrichtung weist im Ausführungsbeispiel 2 Messerbalkenabschnitte 4 auf, die im Ausführungsbeispiel im mittleren Bereich der Zeichnung voneinander getrennt sind. In der Schnwenkstellung, in der sich die Messerbalkenabschnitte 4 in der Fig. 1 befinden, ist die Trennung der beiden Messerbalkenabschnitte 4 voneinander nicht sichtbar, da sie mit ihren einander zugewandten Enden 8 und den daran befestigten äußeren Messerklingen 18 in dem mittleren Mähfinger 10 eingetaucht sind. Neben dem mittleren Mähfinger 10, der sich im Bereich einer sich bei einer Bewegung der Messerbalkenabschnitte 4 ergebenden Lücke 22 befindet, verfügt die Schneideinrichtung 2 über eine Anzahl weiterer Mähfinger 12, die als Gegenschneide für die an den Messerbalkenabschnitte 4 befestigten Messerklingen 6 dienen.

Unterhalb des Mähfingers 10 befindet sich eine ortsfest angebrachte Messerklinge 14, die in Fig.1 von den äußeren Messerklingen 18 verdeckt ist. Die ortsfeste Messerklinge 14 verfügt über Schnittkanten 16, die zur Vorfahrtrichtung V angeschrägt verlaufen.

Im Ausführungsbeispiel ist der Mähfinger 10 über eine Befestigungsleiste 24 mit benachbarten Mähfingern 12 verbunden, so dass die drei Mähfinger 10, 12 eine dreifach-Mähfingerbaugruppe ausbilden. Durch die abstützende Verbindung der drei Mähfinger über die Befestigungsleiste 24 ist insbesondere der Mähfinger 10 besser gegen die Wechselbelastungen, die aus der Bewegung der beiden Messerbalkenabschnitte 4 auf ihn einwirken, abgestützt. Die Befestigungsleiste 24 kann über Schrauben, Nieten oder sonstige Befestigungsmittel mit der Schneideinrichtung 2 verbunden werden.

Außerdem ist in Fig. 1 ein Ausführungsbeispiel für einen Antrieb 26 gezeigt. Der Antrieb 26 geht von einer rotierend angetriebenen Antriebsscheibe 28 aus, mit der exzentrisch zwei Pleuelstangen 30 verbunden sind. Die beiden Pleuelstangen 30 sind an ihren der Antriebsscheibe 28 abgewandten Enden mit Kipphebeln 32 beweglich verbunden. Bei einer Drehbewegung der Antriebsscheibe 28 stoßen oder ziehen die Pleuelstangen 30 die Kipphebel 32 um die Schwenkachsen 34 je nach Drehstellung der Antriebsscheibe 28 in Querrichtung der Schneideinrichtung 2 vor oder zurück. In Fig. 1 ist die Drehbewegung der Antriebsscheibe 28 durch einen Pfeil angedeutet. Die bei einer Drehung der Antriebsscheibe 28 in Pfeilrichtung über die Pleuelstangen 30 und Kipphebel 32 übertragende Bewegung der beiden Messerbalkenabschnitte 4 ist durch kurze Pfeile angedeutet. Da die rechte Pleuelstange 30 ihren äußersten Totpunkt in der gezeichneten Drehstellung in Fig. 1 noch nicht erreicht hat, würde sich bei einer weiteren Drehung der Antriebsscheibe 28 im Uhrzeigersinn der rechte Messerbalkenabschnitt 4 noch ein kleines Stück nach links bewegen. Die linke Pleuelstange 30 würde bei einer Drehung der Antriebsscheibe 28 im Uhrzeigersinn nach rechts gezogen, so dass sich der linke Messerbalkenabschnitt 4 ebenfalls nach links bewegt.

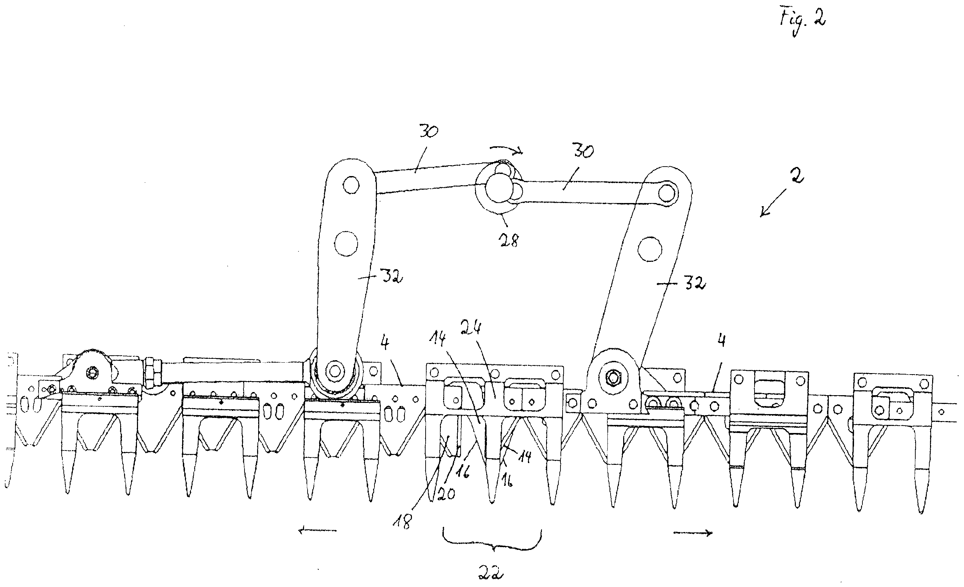

In Fig. 2 ist die Schneideinrichtung 2 mit einer abgewandelten Position der Messerbalkenabschnitte 4 gezeigt. Die Antriebsscheibe 28 ist gegenüber der in Fig. 1 gezeigten Drehstellung um ein kleines Stück weiter gedreht, wodurch die rechte Pleuelstange 30 ihren rechten Totpunkt in Querrichtung erreicht hat. Bei einer weiteren Drehung der Antriebsscheibe 28 im Uhrzeigersinn würde sich der rechte Messerbalkenabschnitt 4 von der über die Pleuelstange 30 und in Kipphebel 32 übertragenen Drehbewegung induziert nach rechts bewegen. Bei einer fortgesetzten Drehbewegung der Antriebsscheibe 28 im Uhrzeigersinn würde die linke Pleuelstange 30 aus der in Fig. 2 gezeigten Position weiter nach rechts gezogen, so dass der linke Kipphebel 32 den linken Messerbalkenabschnitt 4 nach links bewegt.

In der Fig. 2 gezeigten Drehstellung der Antriebsscheibe 28 ist gut erkennbar, dass die äußere Messerklinge 18 des linken Messerbalkenabschnitts 4 von dem im Bereich der Lücke 22 befindlichen Mähfinger 10 wegbewegt worden ist. Die linke äußere Messerklinge 18 verfügt an ihrer Stirnseite über eine Schnittkante 20, die bei einer Bewegung der äußeren Messerklinge 18 auf den Mähfinger 10 zu mit der Schnittkante 16, die sich an der Messerklinge 14 befindet, zusammenwirkt, um Halmgut, das sich in diesem Bereich der Schneideinrichtung 2 befindet, abzuschneiden. Beim Überfahren der äußeren Messeklinge 18 über die Messerklinge 14 ergibt sich ein scherenartiger Schnitt.

Da sich die äußere Messerklinge 18 des rechten Messerbalkenabschnitts 4 noch im Bereich des Mähfingers 10 befindet, ist die an dieser äußeren Messerklinge 18 befindliche Schnittkante 20 in Fig. 2 noch nicht sichtbar. Allerdings ist bei dieser Schwenkstellung des rechten Messerbalkenabschnitts 4 die sich dort befindliche Schnittkante 16 der Messerklinge 14 erkennbar.

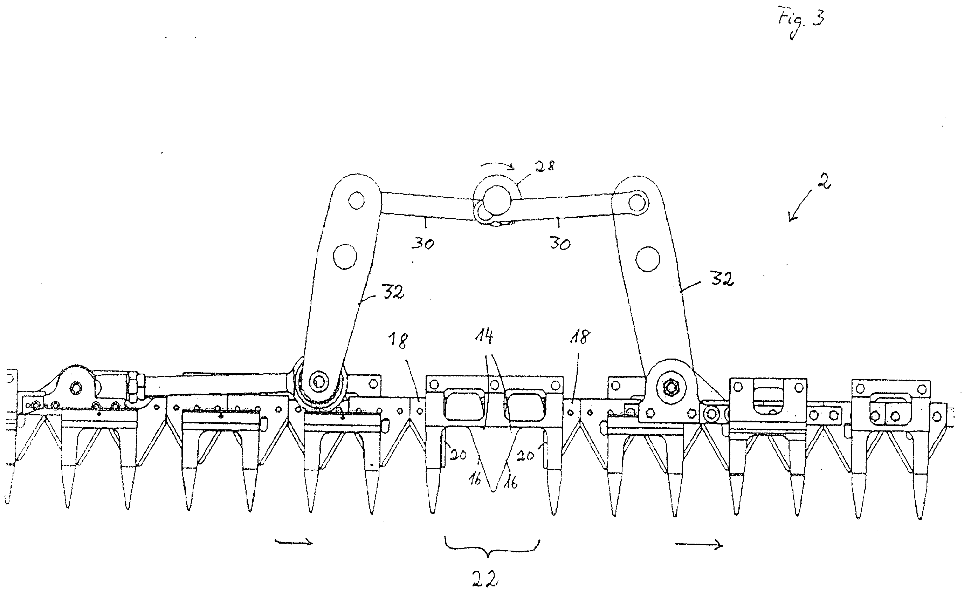

In Fig. 3 sind die beiden Messerbalkenabschnitte 4 nahe ihres äußersten Totpunktes gezeigt, so dass die Lücke 22 zwischen den beiden äußeren Messerklingen 18 gut sichtbar ist. Während bei einer fortgesetzten Drehung der Antriebsscheibe 28 im Uhrzeigersinn der linke Messerbalkenabschnitt 4 bereits wieder in Richtung des Mähfingers 10 bewegt wird, entfernt sich der rechte Messerbalkenabschnitt 4 noch ein kleines Stück vom Mähfinger 10, bevor er wieder zurück zu laufen beginnt. Um die ortsfeste Messerklinge 14 besser darzustellen zu können, ist in Fig. 3 der Mähfinger 10 nicht gezeigt. Es ist in Fig. 3 gut erkennbar, dass Halmgut, das sich im Bereich der Lücke 22 zwischen den Schnittkanten 16 und 20 der ortsfesten Messerklinge 14 und der beiden äußeren Messerklingen 18 befindet, bei einer Rücklaufbewegung der beiden Messerbalkenabschnitte 4 auf den Mähfinger 10 zuverlässig geschnitten wird.

Die Erfindung ist nicht auf das vorstehende Ausführungsbeispiel beschränkt. Dem Fachmann bereitet es keine Schwierigkeiten, das Ausführungsbeispiel auf eine ihm als geeignet erscheinende Weise abzuwandeln, um es an einen konkreten Anwendungsfall anzupassen.

## Patentansprüche

1. Schneideinrichtung (2) für landwirtschaftliche Maschinen mit mehreren, zumindest zeitweise gegenläufig beweglich angetriebenen, sich über die Arbeitsbreite der Schneideinrichtung (2) erstreckenden Messerbalkenabschnitten (4), deren Messerklingen (6) bei einer Hubbewegung der Messerbalkenabschnitte (4) mit ortsfest an der Schneideinrichtung (2) befestigten Gegenmessern scherenschnittartig interagieren, wobei im Bereich einer Lücke (22), die sich im Bereich der einander zugewandten Enden (8) benachbarter Messerbalkenabschnitte (4) in Folge der Bewegung der Messerbalkenabschnitte (4) ergibt und sich laufend entsprechend der Bewegung der Messerbalkenabschnitte (4) verkleinert und wieder vergrößert, in Querrichtung Schnittkanten (16) einer ortsfest im Bereich dieses Mähfingers (10) angeordneten Messerklinge (14) ausgebildet sind, die zur Vorfahrtrichtung (V) der Schneideinrichtung (2) angeschrägt verlaufen, so dass die Schnittkanten (16) dieser Messerklinge (14) eine V-förmige Anordnung aufweisen, die sich entgegen der Vorfahrtrichtung (V) verbreitert, und an den äußeren Stirnseiten der äußeren Messerklingen (18), die an den einander zugewandten Enden (8) benachbarter Messerbalkenabschnitte (4) angebracht sind, Schnittkanten (20) ausgebildet sind, die parallel zur Vorfahrtrichtung der Schneideinrichtung (2) verlaufen, **dadurch gekennzeichnet, dass** im Bereich der Lücke ein Mähfinger (10) angeordnet ist, und ein Antrieb (26) der benachbarten Messerbalkenabschnitte (4) einen Phasenversatz zwischen 80° und 100° aufweist.

2. Schneideinrichtung (2) nach Anspruch 1, **dadurch gekennzeichnet, dass** der im Bereich der Lücke (22) angeordnete Mähfinger (10) mit zwei weiteren beabstandet zu diesem angeordneten Mähfingern (12) über eine gemeinsame Befestigungsleiste (24) verbunden ist, und der seitliche Abstand der beiden weiteren Mähfinger (12) zu dem im Bereich der Lücke (22) angeordneten Mähfinger (10) jeweils mindestens der Breite einer in diesem Zwischenraum bewegten Messerklinge (18) entspricht.

3. Schneideinrichtung (2) nach Anspruch 2, **dadurch gekennzeichnet, dass** die äußeren Messerklingen (18), die an den einander zugewandten Enden (8) benachbarter Messerbalkenabschnitte (4) angebracht sind, jeweils eine Breite aufweisen, die zumindest annähernd der Hälfte der Breite der übrigen an einem Messerbalkenabschnitt (4) angebrachten Messerklingen (6) entspricht, und die Messerklinge (14), die ortsfest im Bereich des im Bereich der Lücke (22) angeordneten Mähfingers (10) angeordnet ist, eine Breite aufweist, die zumindest annähernd der Breite der übrigen an einem Messerbalkenabschnitt (4) angebrachten Messerklingen (6) entspricht.

4. Schneideinrichtung (2) nach einem der vorstehenden Ansprüche, **dadurch gekennzeichnet, dass** zwei benachbarte Messerbalkenabschnitte (4) mit einem Antrieb (26) versehen sind, der die beiden Messerbalkenabschnitte (4) phasenversetzt antreibt.

5. Schneideinrichtung (2) nach Anspruch 4, **dadurch gekennzeichnet, dass** zwei benachbarte Messerbalkenabschnitte (4) von einer rotierend angetriebenen Antriebsscheibe (28) angetrieben sind, deren Drehbewegung über exzentrisch und phasenversetzt mit der Antriebsscheibe verbundene Pleuelstangen (30) auf Kipphebel (32) übertragen ist, die jeweils um etwa mittig angeordnete Schwenkachsen (34) beweglich sind und an ihren der Verbindung mit der zugehörigen Pleuelstange (30) abgewandten Enden (8) mit dem jeweils zugehörigen Messerbalkenabschnitt (4) verbunden sind.

6. Schneideinrichtung (2) nach einem der vorstehenden Anspruch 5, **dadurch gekennzeichnet, dass** die Antriebsscheibe (28) und die Pleuelstangen (30) in einem geschlossenen Getriebegehäuse gelagert sind, das sich an der Unterseite der Schneideinrichtung (2) und hinter den Messerbalkenabschnitten (4) befindet.

## Claims

1. Cutting apparatus (2) for agricultural machines, comprising a plurality of cutter bar portions (4) which are movably driven, at least intermittently contradirectionally, and are spread across the working width of the cutting apparatus (2), the knife blades (6) of which portions interact in the manner of a scissor-cutting action with counter knives, which are immovably fastened to the cutting apparatus (2), during a reciprocating movement of the cutter bar portions (4), cutting edges (16) of a knife blade (14) which is arranged immovably in the region of said mower finger (10) being formed, in the transverse direction, in the region of a gap (22) which occurs in the region of the mutually facing ends (8) of adjacent cutter bar portions (4) as a result of the movement of the cutter bar portions (4) and continuously shrinks and widens again according to the movement of the cutter bar portions (4), which cutting edges (16) extend obliquely with respect to the direction of forward travel (V) of the cutting apparatus (2) such that the cutting edges of said knife blade (14) have a V-shaped arrangement which widens counter to the direction of forward travel (V), and cutting edges (20) being formed on the outer end faces of the outer knife blades (18) which are attached to the mutually facing ends (8) of adjacent cutter bar portions (4), which cutting edges extend in parallel with the direction of forward travel of the cutting apparatus (2), **characterised in that** a mower finger (10) is arranged in the region of the gap, and a drive (26) of the adjacent cutter bar portions (4) has a phase offset of between 80° and 100°.

2. Cutting apparatus (2) according to claim 1, **characterised in that** the mower finger (10) arranged in the region of the gap (22) is connected by means of a common fastening strip (24) to two further mower fingers (12) that are arranged at a distance from said mower finger, and the lateral distance between the two additional mower fingers (12) and the mower finger (10) arranged in the region of the gap (22) corresponds in each case at least to the width of a knife blade (18) that moves in this intermediate space.

3. Cutting apparatus (2) according to claim 2, **characterised in that** the outer knife blades (18) which are attached to the mutually facing ends (8) of adjacent cutter bar portions (4) each have a width that corresponds to at least approximately half the width of the remaining knife blades (6) attached to a cutter bar portion (4), and the knife blade (14) which is immovably arranged in the region of the mower finger (10) arranged in the region of the gap (22) has a width that corresponds at least approximately to the width of the remaining knife blades (6) attached to a cutter bar portion (4).

4. Cutting apparatus (2) according to any of the preceding claims, **characterised in that** two adjacent cutter bar portions (4) are provided with a drive (26) that drives the two cutter bar portions (4) in a phase-offset manner.

5. Cutting apparatus (2) according to claim 4, **characterised in that** two adjacent cutter bar portions (4) are driven by a drive disc (28) driven in rotation, the rotational movement of which drive disc is transferred, via connecting rods (30) which are connected to the drive disc in an eccentric and phase-offset manner, to rocker arms (32) which can each move about pivot pins (34), which are arranged approximately centrally, and are connected, by the ends (8) thereof remote from the connection to the associated connecting rod (30), to the relevant associated cutter bar portion (4).

6. Cutting apparatus (2) according to the preceding claim 5, **characterised in that** the drive disc (28) and the connecting rods (30) are mounted in a closed transmission housing which is located on the underside of the cutting apparatus (2) and behind the cutter bar portions (4).

## Revendications

1. Dispositif de coupe (2) destiné à des machines agricoles comprenant une pluralité de parties de barre porte-couteau (4) qui sont entraînées au moins temporairement suivant des mouvements dans des sens opposés, qui s'étendent sur la largeur de travail du dispositif de coupe (2) et dont les lames de couteau (6) interagissent à la manière de ciseaux, lors d'un mouvement de course des parties de barre porte-couteau (4), avec des couteaux homologues fixés de manière immobile au dispositif de coupe (2), des bords de coupe (16) d'une lame de couteau (14) disposée de manière fixe dans la région d'un doigt de fauchage (10) étant formés dans la direction transversale au niveau d'un interstice (22) obtenu à la région des extrémités mutuellement opposées (8) de parties de barre porte-couteau (4) adjacentes à la suite du mouvement des parties de barre porte-couteau (4) et se réduisant et s'agrandissant à nouveau de façon continue suivant le mouvement des parties de barre porte-couteau (4), lesquels bords de coupe (16) s'étendent en biseau par rapport au sens d'avance (V) du dispositif de coupe (2) de sorte que les bords de coupe (16) de cette lame de couteau (14) ont un agencement en forme de V qui élargit dans le sens opposé au sens d'avance (V) et des bords de coupe (20) étant formés sur les faces frontales extérieures des lames de couteau extérieures (18) qui sont montées aux extrémités mutuellement opposées (8) de parties de barre porte-couteau (4) adjacentes, lesquels bords de coupe (20) s'étendent parallèlement au sens d'avance du dispositif de coupe (2), **caractérisé en ce que** ledit doigt de fauchage (10) est disposé au niveau de l'interstice et un entraînement (26) des parties de barre porte-couteau (4) adjacentes présente un déphasage compris entre 80° et 100°.

2. Dispositif de coupe (2) selon la revendication 1, **caractérisé en ce que** le doigt de fauchage (10) disposée au niveau de l'interstice (22) est relié à deux autres doigts de fauchage (12), disposés à distance de celui-ci, par le biais d'une barre de fixation commune (24), et la distance latérale des deux autres doigts de fauchage (12) au doigt de fauchage (10) disposés au niveau de l'interstice (22) correspond au moins à la largeur d'une lame de couteau (18) déplacée dans cet espace intermédiaire.

3. Dispositif de coupe (2) selon la revendication 2, **caractérisé en ce que** les lames de couteau extérieures (18), qui sont montées aux extrémités mutuellement opposées (8) de parties de barre porte-couteau (4) adjacentes, ont chacune une largeur qui correspond au moins approximativement à la moitié de la largeur des autres lames de couteau (6) montées sur une partie de barre porte-couteau (4) et la lame de couteau (14), disposée de manière fixe dans la région du doigt de fauchage (10) disposé au niveau de l'interstice (22), a une largeur qui correspond au moins approximativement à la largeur des autres lames de couteau (6) montées sur une partie de barre porte-couteau (4).

4. Dispositif de coupe (2) selon l'une des revendications précédentes, **caractérisé en ce que** deux parties de barre porte-couteau (4) adjacentes sont munies d'un entraînement (26) qui entraînent les deux parties de barres porte-couteau (4) avec un déphasage.

5. Dispositif de coupe (2) selon la revendication 4, **caractérisé en ce que** deux parties de barre porte-couteau (4) adjacentes sont entraînées par une poulie d'entraînement (28), entraînée en rotation, dont le mouvement de rotation est transmis à des leviers basculants (32) par le biais de bielles (30) reliées de manière excentrique et déphasée à la poulie d'entraînement, lesquels leviers basculants sont respectivement mobiles sur des axes de pivotement (34) disposés approximativement au centre et sont reliés, à leurs extrémités (8) opposées à la liaison avec la bielle (30) associée, à la partie de barre porte-couteau (4) respectivement associée.

6. Dispositif de coupe (2) selon l'une des revendications précédentes 5, **caractérisé en ce que** la poulie d'entraînement (28) et les bielles (30) sont logées dans un carter de transmission fermée situé au côté inférieur du dispositif de coupe (2) et derrière les parties de barre porte-couteau (4).
